# EUROPÄISCHE PATENTANMELDUNG

(11) **EP 3 967 450 A1**
(43) Veröffentlichungstag der Anmeldung: **16.03.2022**
(21) Anmeldenummer: 21195820.2
(22) Anmeldetag: 09.09.2021
(51) Int. Cl.: B23Q 17/09

(54) **WERKZEUGHALTER UND WERKZEUGSYSTEM MIT EINEM SOLCHEN WERKZEUGHALTER**

(30) Priorität: 09.09.2020 EP 20195286
(71) Anmelder: Hartmetall-Werkzeugfabrik Paul Horn GmbH, 72072 Tübingen (DE); Kistler Holding AG, 8408 Winterthur (CH)
(72) Erfinder: Keitzel, Gunnar, 8442 Hettlingen (CH); Kemmler, Tobias, 72124 Pliezhausen (DE)
(74) Vertreter: Witte, Weller & Partner Patentanwälte mbB

(57) **Zusammenfassung**

Werkzeughalter (10, 10') mit einer Werkzeugaufnahme (14, 14'), die dazu eingerichtet ist, ein Werkzeug (12, 12') mit zumindest einer Schneide (22, 22') zur spanenden Bearbeitung eines Werkstücks darin lösbar aufzunehmen, mit einer Maschinenschnittstelle (26, 26'), die dazu eingerichtet ist, eine Befestigung des Werkzeughalters (10, 10') an einer Werkzeugmaschine zu ermöglichen, und mit einer Sensoraufnahme (30, 30'), in der ein Sensor (32, 32') aufgenommen ist, der dazu eingerichtet ist, ein Messsignal zu erzeugen, das abhängig von einer auf den Werkzeughalter (10, 10') einwirkenden Kraft ist, wobei die Sensoraufnahme (30, 30') sowohl von der Werkzeugaufnahme (14, 14') als auch von der Maschinenschnittstelle (26, 26') beabstandet angeordnet ist, so dass der Sensor (32, 32') weder mit dem Werkzeug (12, 12') noch mit der Werkzeugmaschine in direktem Kontakt steht, wenn das Werkzeug (12, 12') in der Werkzeugaufnahme (14, 14') aufgenommen ist und der Werkzeughalter (10, 10') an der Werkzeugmaschine befestigt ist.

## Beschreibung

Die vorliegende Erfindung betrifft einen Werkzeughalter mit einer Werkzeugaufnahme, die dazu eingerichtet ist, ein Werkzeug mit zumindest einer Schneide zur spanenden Bearbeitung eines Werkstücks darin lösbar aufzunehmen, mit einer Maschinenschnittstelle, die dazu eingerichtet ist, eine Befestigung des Werkzeughalters an einer Werkzeugmaschine zu ermöglichen, und mit einer Sensoraufnahme, in der ein Sensor aufgenommen ist, der dazu eingerichtet ist, ein Messsignal zu erzeugen, das abhängig von einer auf den Werkzeughalter einwirkenden Kraft ist.

Ein weiterer Aspekt der vorliegenden Erfindung betrifft ein Werkzeugsystem mit einem solchen Werkzeughalter und dem Werkzeug mit der zumindest einen Schneide zur spanenden Bearbeitung des Werkstücks. Dieser zuletzt genannte Aspekt der vorliegenden Erfindung betrifft also nicht nur den erfindungsgemäßen Werkzeughalter allein, sondern auch das darin montierbare Werkzeug. Bei diesem Werkzeug kann es sich grundsätzlich um jegliche Art von spanabhebendem Werkzeug handeln. Vorzugsweise handelt es sich bei dem Werkzeug um ein Drehwerkzeug oder ein Fräswerkzeug.

Der bei dem erfindungsgemäßen Werkzeughalter zum Einsatz kommende Sensor ist vorzugsweise ein Kraftaufnehmer.

Bei der Fertigung von Werkstücken mittels Werkzeugmaschinen besteht oft der Wunsch, die Kräfte zu messen, die auf das Werkzeug wirken, das in dem Werkzeughalter, der seinerseits in der Werkzeugmaschine befestigt ist, angeordnet ist.

Der Einsatz von Sensoren zur Überwachung verschiedener auf das Werkzeug einwirkender Kräfte ist aus dem Stand der Technik bereits grundsätzlich bekannt.

Aus der EP 1 984 142 B1 ist es beispielsweise bekannt, mit piezokeramischen Sensoren, die auf den Schneidkörper oder den Halter des Werkzeugs ausgeübten Druck-, Zug- und Scherkräfte zu messen und die Werkzeugmaschine derart zu steuern, dass Schäden durch Überlastung verhindert werden. Dabei werden Grenzwerte für die Kräfte vorgegeben, bei deren Überschreitung in die Bearbeitung eingegriffen wird.

Ein ähnliches Werkzeug, bei dem ein oder mehrere Sensoren am Werkzeug zum Zwecke einer präventiven Bruch-, Riss- und/oder Verschleißerkennung der Schneideinsatzes verwendet werden, ist aus der DE 10 2014 224 778 A1 bekannt.

Die Verwendung derartiger Sensoren in spanabhebenden Werkzeugen und Werkzeughaltern muss jedoch nicht zwangsläufig der Bruch- oder Verschleißerkennung einer am Werkzeug austauschbar angeordneten Schneideinsatzes dienen. Die Sensoren können auch zur Qualitätssicherung und/oder Dokumentation eingesetzt werden. Beispielsweise lassen sich mit derartigen Sensoren die auf den Schneideinsatz des Werkzeugs während der Bearbeitung einwirkenden Kräfte über die Zeit aufzeichnen und zu Dokumentationszwecken abspeichern. Sie dienen dann häufig zur Überwachung der Prozesskraft und Prozessstabilität. Ebenso kann dies der Werkzeugzustandsüberwachung dienen, was sich positiv auf die Robustheit und Langlebigkeit derartiger Werkzeugsysteme im industriellen Dauereinsatz auswirkt.

Was die Art der hierfür zum Einsatz kommenden Sensoren angeht, ließen sich grundsätzlich Dynamometer verwenden. Nachteilhaft sind jedoch deren große Abmessungen, so dass Dynamometer im Maschinenraum oft stören und auch nicht an jeder beliebigen Stelle in einer Werkzeugmaschine eingebaut werden können. Zudem sind die Herstell- und Beschaffungskosten von Dynamometern relativ hoch.

Ebenfalls können zum Messen von Werkzeugkräften Dehnmessstreifen eingesetzt werden. Prinzip bedingt erfordern Dehnmessstreifen eine gewisse Nachgiebigkeit der zu messenden Maschinenteile, insbesondere der Werkzeuge, welche in der Präzisionsbearbeitung von Werkstücken allerdings unerwünscht ist. Die Verwendung von Dehnmessstreifen führt daher zu einer geringen dynamischen Auflösung der Messungen.

In der CH 680 421 A5 ist ferner eine Mehrkomponenten-Kraftmessanordnung offenbart. Für die meisten Anwendungsfälle in der Zerspanungstechnik ist allerdings eine Kraftmessung in einer charakteristischen Kraftrichtung ausreichend und keine mehrdimensionale Messung (beispielsweise 3-Komponenten-Messung) erforderlich.

Eine viel wichtigere Eigenschaft ist häufig die Stabilität hinsichtlich der Sensitivität der Sensorik über lange Zeiträume, so dass Veränderungen der Zerspanungsprozesse über eine Vielzahl von Zyklen und Fertigungsaufträgen sicher miteinander verglichen und beurteilt werden können. Dem Wunsch nach einer möglichst hohen Sensitivität der Messung steht häufig jedoch das Problem einer möglichst geschickten Anordnung des Sensors innerhalb der Werkzeugmaschine oder innerhalb des Werkzeugs gegenüber.

Um eine möglichst genaue Messung zu ermöglichen, ist es meist wünschenswert, den Sensor möglichst nahe an der Bearbeitungsstelle, also möglichst nahe an der Schneide des Werkzeugs, einzusetzen. Dies ist jedoch nicht nur aus Platzgründen, sondern auch aus reinen Stabilitätsgründen häufig problematisch. Beispielsweise ist es bei Werkzeugen mit austauschbaren Schneidplatten, die in einem Schneidplattenhalter eingespannt werden, nur bedingt möglich, einen Sensor in der Schneidplattenaufnahme unmittelbar zwischen der Schneidplatte und dem Schneidplattenhalter anzubringen. Eine derartige Anbringung ist bei den aus dem Stand der Technik bekannten Werkzeugen jedoch aus rein mechanischen Gründen meist eher ungeeignet, da der Sensor die Stabilität der Einspannung der Schneidplatte im Schneidplattenhalter beeinträchtigen könnte.

Eine Anbringung des Sensors an der Verbindungsstelle, an der das Werkzeug in dem Werkzeughalter eingespannt ist, oder an der Verbindungsstelle, an der der Werkzeughalter an der Werkzeugmaschine befestigt ist, ist sowohl aus Platzgründen als auch aus Stabilitätsgründen wesentlich einfacher zu gewährleisten. Aus der WO 2020/074434 A1 ist es beispielsweise bekannt, einen Sensor in einer Aussparung am Schaft des Werkzeugs anzuordnen, so dass der Sensor zwischen dem Schaft des Werkzeugs und der Werkzeughalterung, in der das Werkzeug eingespannt ist, angeordnet ist.

Aus der DE 34 07 619 A1 ist es ferner bekannt, das Sensorgehäuse unmittelbar anliegend an ein Maschinenteil in einer entsprechenden Aussparung anzuordnen. Des Weiteren ist es aus der DE 10 2012 005 555 B3 bekannt, eine Messplatte mit hohlzylindrischen Ausnehmungen vorzusehen, in die piezoelektrische Sensoren zur Messung von Kräften unterschiedlicher Kraftrichtungen jeweils mittels eines aufgeschraubten Druckstücks unter Vorspannung montiert sind. Eine derartige Messplatte ist insbesondere zur Messung von zwischen Lagerflächen auftretenden hohen Schub- und Druckkräften geeignet.

Im Vergleich zu den zuvor genannten Lösungen, die aus dem Stand der Technik bereits bekannt sind, ist es wünschenswert, eine Anordnung eines Sensors innerhalb des Werkzeugsystems zu ermitteln, die eine Reduzierung der Hysterese des Sensors und damit stabilere und zuverlässiger wiederholbare Messungen ermöglicht. Des Weiteren sollte das System auch durch den Wechsel von Schneidplatten innerhalb des Werkzeugs oder durch Wechsel des gesamten Werkzeugs nicht negativ beeinflusst werden. Zudem sollte das Werkzeugsystem anwenderfreundlich sein und beim Einrichten des Werkzeugs keinen signifikanten Mehraufwand erzeugen.

Es ist daher eine Aufgabe der vorliegenden Erfindung, einen Werkzeughalter und ein Werkzeugsystem mit einem solchen Werkzeughalter und einem dazugehörigen Werkzeug bereitzustellen, die die zuvor genannten Ziele bezüglich Linearität, einer Reduzierung der störenden Hysterese des Sensors, einer Verbesserung der Messstabilität und einer möglichst einfachen Handhabung möglichst gut erfüllen.

Diese Aufgabe wird erfindungsgemäß durch einen Werkzeughalter der eingangs genannten Art gemäß Anspruch 1 dadurch gelöst, dass die Sensoraufnahme sowohl von der Werkzeugaufnahme als auch von der Maschinenschnittstelle beabstandet angeordnet ist, so dass der Sensor weder mit dem Werkzeug noch mit der Werkzeugmaschine in direktem Kontakt steht, wenn das Werkzeug in der Werkzeugaufnahme aufgenommen ist und der Werkzeughalter an der Werkzeugmaschine befestigt ist.

Auf den ersten Blick könnte man meinen, die Art der erfindungsgemäßen Anordnung des Sensors sei von Nachteil, da der Sensor innerhalb des Werkzeughalters nicht direkt im Kraftschluss an der Verbindungsstelle zwischen Werkzeughalter und Werkzeugmaschine oder an der Verbindungsstelle zwischen Werkzeughalter und darin aufgenommenem Werkzeug angeordnet ist. Tatsächlich ist die von den beiden genannten Stellen beabstandete Anordnung des Sensors jedoch nicht nur in Bezug auf die Messstabilität und die Wiederholbarkeit der Messung von Vorteil, sondern auch in Bezug auf diverse weitere Aspekte. Durch die Anbringung im Kraftnebenschluss sind die durch den Sensor fließenden Kraftanteile zwar geringer als bei einer Anbringung dessen im Kraftschluss. Die Erfinder haben jedoch erkannt, dass sich durch die beschriebene Anordnung des Sensors eine hohe Messqualität, beschrieben durch die Linearität und eine möglichst kleine Hysterese, sicherstellen lässt. Störeinflüsse werden reduziert, so dass die Wiederholbarkeit der Messung deutlich verbessert ist.

Der Sensor ist vollständig in den Halter integriert und somit an einer geschützten Position angeordnet. Die Anbringung im Kraftfluss innerhalb des Werkzeughalters ermöglicht sehr exakte Messungen. Die Integration in den Werkzeughalter ermöglicht darüber hinaus eine einfache und geordnete Zuleitung der Kabel.

Von besonderem Vorteil ist darüber hinaus die Tatsache, dass sich das Werkzeug einfach vom Werkzeughalter lösen und durch ein anderes Werkzeug austauschen lässt, ohne dass hierzu der Sensor und das dazugehörige Kabel aus dem Werkzeughalter demontiert oder deren Anordnung verändert werden müssen. Die Montage eines Werkzeugs am erfindungsgemäßen Werkzeughalter hat also keinen signifikanten bzw. gar keinen Einfluss auf die Sensorik.

Gemäß einer bevorzugten Ausgestaltung der vorliegenden Erfindung ist es vorgesehen, dass eine sensitive Achse des Sensors, entlang derer der Sensor seine Hauptsensitivität hat, unter einem spitzen Winkel relativ zu einer Längsachse des Werkzeughalters ausgerichtet ist.

Ist der Sensor als Kraftaufnehmer ausgebildet, kann es sich bei der genannten sensitiven Achse beispielsweise um eine Achse handeln, die senkrecht zu einer Oberseite des Sensors ausgerichtet ist. Die Längsachse des Werkzeughalters, zu der die sensitive Achse des Sensors vorzugsweise unter einem spitzen Winkel geneigt ist, ist bevorzugt quer zu der mindestens einen Schneide des Werkzeugs ausgerichtet.

Unter "quer" wird vorliegend jede Art der Ausrichtung verstanden, die nicht parallel ist. Hierunter fällt also jede Art der Ausrichtung unter einem Winkel ungleich 0°. Der Begriff "quer" beinhaltet damit also auch senkrecht bzw. orthogonal, ist jedoch nicht darauf beschränkt.

Besonders bevorzugt ist es erfindungsgemäß vorgesehen, dass die sensitive Achse des Sensors mit einer Richtung einer resultierenden Kraft, die aus der auf die zumindest eine Schneide einwirkenden Kraft resultiert, zusammenfällt oder unter einem Winkel von maximal 10° zu dieser Richtung ausgerichtet ist.

Die empfindliche Achse des Sensors stimmt damit möglichst gut für die meisten Anwendungsfälle mit der größten Kraftrichtung überein. Der Einlegewinkel des Sensors entspricht der Richtung der aus der Schnittkraft resultierenden Kraft. Damit ist der Sensor exakt im Kraftfluss innerhalb des Werkzeughalters angeordnet, so dass eine sehr präzise Messung möglich ist. Durch die möglichst gute Übereinstimmung der sensitiven Achse des Sensors mit der resultierenden Kraftrichtung in Zug/Druck-Richtung wird der Sensor möglichst wenig auf Scherung beansprucht, so dass während der Messung eine möglichst kleine Hysterese auftritt.

Eine Abweichung von 10° von dieser Kraftrichtung ist generell tolerierbar. Es versteht sich, dass hierunter eine Abweichung von +/- 10° gemeint ist, so dass die Angabe als betragsmäßige Angabe zu verstehen ist. Vorzugsweise beträgt die genannte Richtungsabweichung der sensitiven Achse relativ zu der Richtung der resultierenden Kraft maximal 5°. Besonders bevorzugt ist die sensitive Achse parallel zu der Richtung der resultierenden Kraft ausgerichtet bzw. fällt mit dieser zusammen.

Gemäß einer weiteren Ausgestaltung ist es bevorzugt, dass die Werkzeugaufnahme eine erste Anlagefläche und eine quer dazu verlaufende zweite Anlagefläche zur Anlage an dem Werkzeug aufweist, und dass die sensitive Achse des Sensors unter einem ersten spitzen Winkel relativ zu der ersten Anlagefläche und unter einem zweiten spitzen Winkel relativ zu der zweiten Anlagefläche ausgerichtet ist.

An den beiden genannten Anlageflächen liegt das Werkzeug an dem Werkzeughalter vorzugsweise jeweils bündig an, wenn das Werkzeug in der Werkzeugaufnahme des Werkzeughalters aufgenommen ist. Es versteht sich, dass grundsätzlich noch weitere Anlageflächen oder einzelne Anlagepunkte vorhanden sein können. Vorzugsweise ist die sensitive Achse des Sensors zu den beiden genannten Anlageflächen der Werkzeugaufnahme des Werkzeughalters jeweils unter einem Winkel von 30° - 60° ausgerichtet. Besonders bevorzugt sind die beiden genannten Anlageflächen senkrecht bzw. orthogonal zueinander ausgerichtet, so dass es sich bei den genannten beiden spitzen Winkeln (erster und zweiter spitzer Winkel) dann um Gegenwinkel handelt, die beide bevorzugt jeweils in den zuvor genannten Winkelbereich fallen.

Je nach Art der Anwendung können die zuvor genannten Winkel auch einen Kompromiss darstellen, der möglichst viele verschiedene Arten von Werkzeugen abdecken soll.

Die erste Anlagefläche kann beispielsweise parallel zu der Längsachse des Werkzeughalters ausgerichtet sein. In diesem Fall entspricht der zuvor genannte erste spitze Winkel dem zuvor genannten Einlegewinkel des Sensors, der zwischen der sensitiven Achse des Sensors und der Längsachse des Werkzeughalters gemessen wird. Bei einer kombinierten Zug- und Druckbelastung wird der Einlegewinkel des Sensors in dem zuvor genannten Bereich von 30° - 60° gewählt. Für eine reine Schubbelastung wäre der Einlegewinkel des Sensors hingegen mit 0° zu wählen.

Bevorzugt ist der in der Sensoraufnahme montierte Sensor im Kraftnebenschluss des Werkzeughalters angeordnet. Hierdurch fließt weiterhin ein Großteil der Kraft durch den Werkzeughalter, so dass die Stabilität des Werkzeughalters und damit die Stabilität des gesamten Werkzeugsystems nur minimal verringert wird.

Gemäß einer weiteren Ausgestaltung der vorliegenden Erfindung ist es vorgesehen, dass die Sensoraufnahme als Aufnahmetasche ausgebildet ist, die den Sensor von zumindest vier Seiten umschließt. Besonders bevorzugt umschließt die als Aufnahmetasche ausgebildete Sensoraufnahme den Sensor von fünf Seiten.

Der Sensor wird gemäß dieser Ausgestaltung damit wie von einem geschlossenen Rahmen umgeben. Dadurch wird die Kerbwirkung auf den Werkzeughalter im Vergleich zu einem offenen Rahmen möglichst gering gehalten, eine dauerhafte Verformung des Werkzeughalters vermieden und die Robustheit bei größeren zu messenden Kräften sichergestellt. Bei einem Umschließen des Sensors nicht nur von vier, sondern von fünf Seiten wird die Robustheit und Stabilität weiter erhöht.

Gemäß einer weiteren Ausgestaltung ist es vorgesehen, dass der Sensor in der Sensoraufnahme mit Hilfe einer Einspanneinrichtung eingespannt ist.

Mit Hilfe dieser Einspanneinrichtung ist der Sensor auch in kraftunbelastetem Zustand des Werkzeughalters vorgespannt. Dies ist wichtig, damit der Sensor entlang seiner sensitiven Achse sowohl Zug- als auch Druckbelastungen messen kann. Im Falle einer reinen Messung von Zugbelastung ist die Vorspannung des Sensors vorzugsweise größer gewählt als die durch den Zerspanungsprozess auf den im Werkzeughalter eingesetzten Sensor einwirkende Zugkraft. Dies ist deshalb vonnöten, damit der Sensor stets in einem vorgespannten Zustand verbleibt.

Die Einspanneinrichtung ist bevorzugt zumindest teilweise von dem Werkzeughalter lösbar ausgestaltet. Besonders bevorzugt lässt sich die Einspanneinrichtung vollständig von dem Werkzeughalter lösen.

Gemäß einer weiteren bevorzugten Ausgestaltung ist es vorgesehen, dass die Einspanneinrichtung ein erstes Keilelement und ein zweites Keilelement aufweist. Mit Hilfe dieser beiden Keilelemente lässt sich der Sensor sehr einfach in der Sensoraufnahme des Werkzeughalters verspannen. Der Vorteil besteht neben der einfachen Klemmung im Wesentlichen in der Lösbarkeit und der Positionierbarkeit des Sensors.

Besonders bevorzugt liegt das erste Keilelement mit einer ersten Seitenfläche an dem Sensor an und mit einer gegenüberliegenden zweiten Seitenfläche an einer Keilfläche des zweiten Keilelements an, wobei die zweite Seitenfläche des ersten Keilelements und die Keilfläche des zweiten Keilelements unter einem spitzen Winkel relativ zu der ersten Seitenfläche ausgerichtet sind. Dieser zuletzt genannte spitze Winkel ist gleich groß sowohl für die zweite Seitenfläche als auch für die Keilfläche.

Es handelt sich gemäß dieser Ausgestaltung also um zwei gegenläufige Keilelemente, die in der taschenförmigen Sensoraufnahme verspannt werden, um den Sensor zu befestigen. Hierdurch erfolgt eine weitere Reduzierung der Scherkräfte.

Es versteht sich, dass der Begriff "Keilfläche" des zweiten Keilelements lediglich zur Unterscheidung der "Seitenflächen" des ersten Keilelements verwendet wurde, jedoch vorliegend nicht einschränkend zu verstehen ist. Bei dieser "Keilfläche" handelt es sich ebenfalls um eine Seitenfläche des zweiten Keilelements.

Eines der beiden Keilelemente, bevorzugt das zweite Keilelement, wird vorzugsweise mit Hilfe eines Befestigungselements in der Sensoraufnahme verschiebbar befestigt. Als Befestigungselement dient beispielsweise eine Schraube, mit Hilfe derer sich das zweite Keilelement innerhalb der Sensoraufnahme verschieben lässt. Durch diese Art der kombinierten Schraub-Keil-Verbindung lässt sich die Vorspannkraft des Sensors sehr präzise einstellen. Auch dies wirkt sich wiederum positiv auf die Reduzierung der Hysterese und damit auf die Messstabilität des Sensors aus.

Gemäß einer Ausgestaltung ist es vorgesehen, dass in der Sensoraufnahme eine Abstützung angeordnet ist, die dazu eingerichtet ist, das erste Keilelement bei einem Einschieben des zweiten Keilelements in die Sensoraufnahme abzustützen.

Durch diese Abstützung übt das sensorzugewandte, erste Keilelement beim Einschieben des zweiten Keilelements keine Schub- und/oder Scherkräfte auf den Sensor aus, welche den Sensor negativ beeinflussen oder sogar beschädigen könnten. Bei der Abstützung kann es sich beispielsweise um eine in der Sensoraufnahme vorgesehene Abstützfläche handeln, an der das erste Keilelement bündig anliegt.

Gemäß einer weiteren Ausgestaltung ist es vorgesehen, dass eine sensitive Achse des Sensors, entlang derer der Sensor seine Hauptsensitivität hat, parallel zu einer Längsachse des Werkzeughalters ausgerichtet ist. Dies ist insbesondere dann wünschenswert, wenn die Richtung der resultierenden Kraft am Ort des Sensors parallel zu der Längsachse des Werkzeughalters ausgerichtet ist.

Beispielsweise kann dies bei einer Ausgestaltung des Werkzeughalters von Vorteil sein, bei der die Werkzeugaufnahme an einem stirnseitigen Ende des Werkzeughalters angeordnet ist und als topfförmige Ausnehmung im Werkzeughalter ausgestaltet ist.

Bei dem Sensor handelt es sich, wie bereits erwähnt, vorzugsweise um einen Kraftaufnehmer. Dieser Kraftaufnehmer kann beispielsweise einen piezoelektrischen Sensor aufweisen. Ein solcher piezoelektrischer Sensor lässt sich elektronisch im Messbereich verändern und dessen Messergebnisse sind nicht von einer Verformung des Werkzeughalters abhängig. Piezosensoren unterliegen zudem einem sehr geringen Alterungsprozess, so dass stabile und wiederholbare Messungen mit dem Sensor über eine sehr lange Lebensdauer möglich sind.

Gemäß einer weiteren Ausgestaltung weist der Sensor ein Kabel auf, das durch einen im Inneren des Werkzeughalters verlaufenden Kabelkanal aus der Sensoraufnahme nach außen geführt ist.

Die Kabelführung erfolgt also mit anderen Worten gemäß dieser Ausgestaltung innerhalb des Werkzeughalters. Der Kabelkanal weist vorzugsweise einen Kabelaustritt auf, der an der werkzeugabgewandten Seite des Werkzeughalters angeordnet ist und aus dem das Kabel aus dem Kabelkanal austritt. Der Austritt des Kabels ist also vorzugsweise an der von der Schneide des Werkzeugs abgewandten Seite des Werkzeughalters gewählt. Auf diese Weise ist das Kabel sicher untergebracht und, insbesondere während eines Werkzeugwechsels, vor Beschädigungen geschützt.

Wie eingangs bereits erwähnt, betrifft die vorliegende Erfindung nicht nur den Werkzeughalter selbst, sondern auch ein Werkzeugsystem, das den Werkzeughalter und das darin einspannbare Werkzeug mit der zumindest einen Schneide zur spanenden Bearbeitung des Werkstücks aufweist.

Gemäß einer Ausgestaltung dieses Werkzeugsystems ist es vorgesehen, dass das Werkzeug eine Werkzeugkassette ist mit einer Schneidplattenaufnahme, in der eine Schneidplatte angeordnet ist, an der die zumindest eine Schneide ausgebildet ist, und dass die Werkzeugkassette mit Hilfe zumindest eines Befestigungselements in der Werkzeugaufnahme an dem Werkzeughalter lösbar befestigt ist.

Derartige Werkzeugkassetten eignen sich insbesondere aufgrund ihrer relativ platzsparenden Ausgestaltung für die Anwendung in Werkzeugmaschinen, in denen mehrere Werkzeuge gleichzeitig verwendet werden sollen. Bei dem Werkzeug selbst kann es sich beispielsweise um ein Drehwerkzeug oder ein Fräswerkzeug handeln. Die Werkzeugkassette ist typischerweise relativ flach ausgestaltet und wird mit einer oder mehreren Befestigungsschrauben, die als Befestigungselemente dienen, an dem Werkzeughalter lösbar befestigt. Bei Bedarf lässt sich die Werkzeugkassette somit einfach und schnell von dem Werkzeughalter lösen. Muss lediglich die Schneidplatte, beispielsweise aufgrund von Verschleiß, ausgetauscht werden, kann die Werkzeugkassette hingegen am Werkzeughalter montiert bleiben und die Schneidplatte separat von der Werkzeugkassette gelöst und durch eine neue ersetzt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Ebenso versteht es sich, dass sich die in den Ansprüchen zu dem Werkzeughalter definierten Merkmale nicht nur auf den erfindungsgemäßen Werkzeughalter beziehen, sondern in äquivalenter Weise auch auf das erfindungsgemäße Werkzeugsystem. Alle vorigen Ausführungen beziehen sich daher nicht nur auf den erfindungsgemäßen Werkzeughalter, sondern äquivalent auch auf das erfindungsgemäße Werkzeugsystem, das den erfindungsgemäßen Werkzeughalter beinhaltet.

Ausführungsbeispiele der Erfindung sind in den Zeichnungen dargestellt und wird in der nachfolgenden Beschreibung näher erläutert. Es zeigen:
- Fig. 1: eine perspektivische Ansicht eines ersten Ausführungsbeispiels des erfindungsgemäßen Werkzeugsystems, das den erfindungsgemäßen Werkzeughalter aufweist;
- Fig. 2: eine Explosionsdarstellung des in Fig. 1 gezeigten ersten Ausführungsbeispiels des erfindungsgemäßen Werkzeugsystems;
- Fig. 3: eine Seitenansicht des in Fig. 1 gezeigten ersten Ausführungsbeispiels des erfindungsgemäßen Werkzeugsystems;
- Fig. 4: eine weitere Seitenansicht des in Fig. 1 gezeigten ersten Ausführungsbeispiels des erfindungsgemäßen Werkzeugsystems;
- Fig. 5: eine Schnittansicht eines Details des in Fig. 1 gezeigten ersten Ausführungsbeispiels des erfindungsgemäßen Werkzeughalters;
- Fig. 6: eine perspektivische Ansicht eines zweiten Ausführungsbeispiels des erfindungsgemäßen Werkzeugsystems, das den erfindungsgemäßen Werkzeughalter aufweist;
- Fig. 7: eine Explosionsdarstellung des in Fig. 6 gezeigten zweiten Ausführungsbeispiels des erfindungsgemäßen Werkzeugsystems; und
- Fig. 8: eine Schnittansicht des in Fig. 6 gezeigten zweiten Ausführungsbeispiels des erfindungsgemäßen Werkzeugsystems.

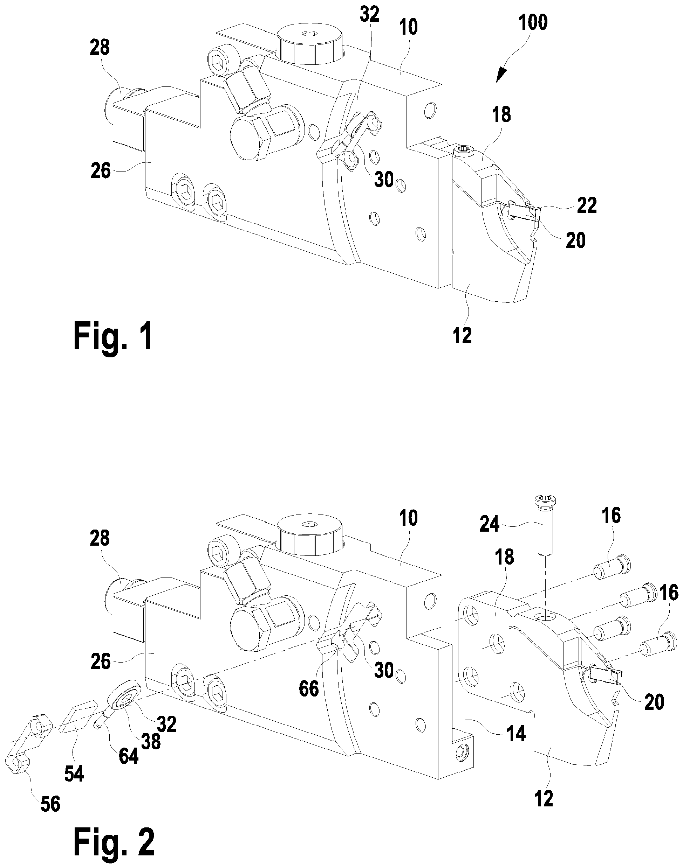

Die Fig. 1-4 zeigen ein erstes Ausführungsbeispiel des erfindungsgemäßen Werkzeugsystems in einer perspektivischen Ansicht, einer Explosionsdarstellung sowie in zwei Seitenansichten. Das erfindungsgemäße Werkzeugsystem ist darin in seiner Gesamtheit mit der Bezugsziffer 100 bezeichnet.

Das Werkzeugsystem 100 weist einen Werkzeughalter 10 und ein Werkzeug 12 auf. Das Werkzeug 12 ist an dem Werkzeughalter 10 lösbar befestigt. Der Werkzeughalter 10 weist dazu eine taschenförmig ausgestaltete Werkzeugaufnahme 14 auf, in der das Werkzeug 12 exakt definiert angeordnet werden kann. In dem vorliegenden Ausführungsbeispiel dienen vier Schrauben 16 der Befestigung des Werkzeugs 12 in der Werkzeugaufnahme 14. Es versteht sich jedoch, dass auch mehr oder weniger Schrauben verwendet werden können, um das Werkzeug 12 an dem Werkzeughalter 10 zu befestigen. Ebenso sind andere Befestigungsmittel zum Befestigen des Werkzeugs 12 am Werkzeughalter 10 denkbar.

Das Werkzeug 12 weist seinerseits einen Schneidplattenhalter 18 und eine lösbar darin angeordnete Schneidplatte 20 auf. Bei der Schneidplatte 20 handelt es sich typischerweise um einen Schneideinsatz oder eine sog. Wendeschneidplatte aus Hartmetall. Die Schneidplatte 20 weist zumindest eine Schneide 22 zur spanabhebenden Bearbeitung eines Werkstücks auf. In diesem Fall handelt es sich um eine Schneide 22 mit einer geradlinig ausgeführten Schneidkante. Genauso gut kann die Schneidplatte 20 jedoch auch eine gekrümmte Schneide oder mehrere verschiedene Schneiden zur spanabhebenden Bearbeitung des Werkstücks aufweisen.

In dem vorliegend gezeigten Ausführungsbeispiel ist das Werkzeug 12 als Drehwerkzeug ausgestaltet, das insbesondere zum Einstechdrehen geeignet ist. Die vorliegende Erfindung ist jedoch nicht auf diese Art der Ausgestaltung des Werkzeugs 12 beschränkt.

Der Schneidplattenhalter 18 ist als Werkzeugkassette ausgestaltet, was aus Platzgründen insbesondere dann von Vorteil ist, wenn innerhalb einer Werkzeugmaschine mehrere derartige Werkzeugsysteme gleichzeitig zum Einsatz kommen. Die Fixierung der Schneidplatte 20 in dem Schneidplattenhalter bzw. der Werkzeugkassette 18 erfolgt hier mit Hilfe einer weiteren Spannschraube 24. Andere Befestigungsmittel zum Einspannen der Schneidplatte 20 sind jedoch ebenfalls denkbar. In jedem Fall ist es von Vorteil, wenn sich die Schneidplatte 20 separat von der Werkzeugkassette 18 lösen lässt, ohne dass diese ihrerseits von dem Werkzeughalter 10 gelöst werden muss. Auf diese Weise kann die Schneidplatte 20 sehr einfach durch eine neue ersetzt werden, wenn diese verschlissen ist, ohne dass hierfür das gesamte Werkzeug 12 aus dem Werkzeughalter 10 ausgebaut werden muss.

Der Werkzeughalter 10 weist des Weiteren eine Maschinenschnittstelle 26 auf, die eine Befestigung des Werkzeughalters 10 an einer Werkzeugmaschine ermöglicht. Zu der Maschinenschnittstelle 26 kann ein Teil des Gehäuses des Werkzeughalters 10 gehören. Ebenso können weitere Befestigungsmittel, wie beispielsweise Schrauben, zu dieser Maschinenschnittstelle 26 gehören. Des Weiteren gehört zu der Maschinenschnittstelle 26 in dem vorliegenden Ausführungsbeispiel ein Kühlmittelanschluss 28, der an der Rückseite des Werkzeughalters 10 angeordnet ist.

Der erfindungsgemäße Werkzeughalter 10 weist des Weiteren eine Sensoraufnahme 30 auf, in der ein Sensor 32 lösbar befestigt ist. Wie insbesondere aus Fig. 2 ersichtlich ist, ist die Sensoraufnahme 30 als taschenförmige Aufnahme ausgestaltet, in die der Sensor 32 vollständig oder zumindest nahezu vollständig einführbar ist. Die taschenförmige Sensoraufnahme 30 umgibt den Sensor 32 in dem vorliegend gezeigten Ausführungsbeispiel von fünf Raumseiten. Eine der sechs Raumseiten ist hingegen offen, um den Sensor 32, wie in Fig. 2 schematisch angedeutet, aus der Sensoraufnahme 30 entnehmen zu können.

Die Sensoraufnahme 30 ist derart am Werkzeughalter 10 angeordnet, dass der in die Sensoraufnahme 30 eingesetzte Sensor in montiertem Zustand des Werkzeughalters weder mit dem an dem Werkzeughalter 10 montierten Werkzeug 12 noch mit der Werkzeugmaschine, an der der Werkzeughalter 10 befestigt wird, direkt in Kontakt tritt. Die Sensoraufnahme 30 ist mit anderen Worten also sowohl von der Werkzeugaufnahme 14 als auch von der Maschinenschnittstelle 26 beabstandet angeordnet.

Bei dem Sensor 32 handelt es sich vorzugsweise um einen Kraftaufnehmer. Dieser Kraftaufnehmer ist dazu eingerichtet, die auf den Werkzeughalter 10 wirkenden Kräfte, die aus den Zerspanungskräften, die auf das Werkzeug 12 einwirken, resultieren, zu messen. Der Sensor 32 dient also mit anderen Worten der Messung der Schnitt- bzw. Zerspanungskräfte, die während der Verwendung des Werkzeugs 12 auf die zumindest eine Schneide 22 einwirken. Zumindest ist das von dem Sensor 32 erzeugte Messsignal abhängig von einer auf die zumindest eine Schneide 22 einwirkenden Kraft.

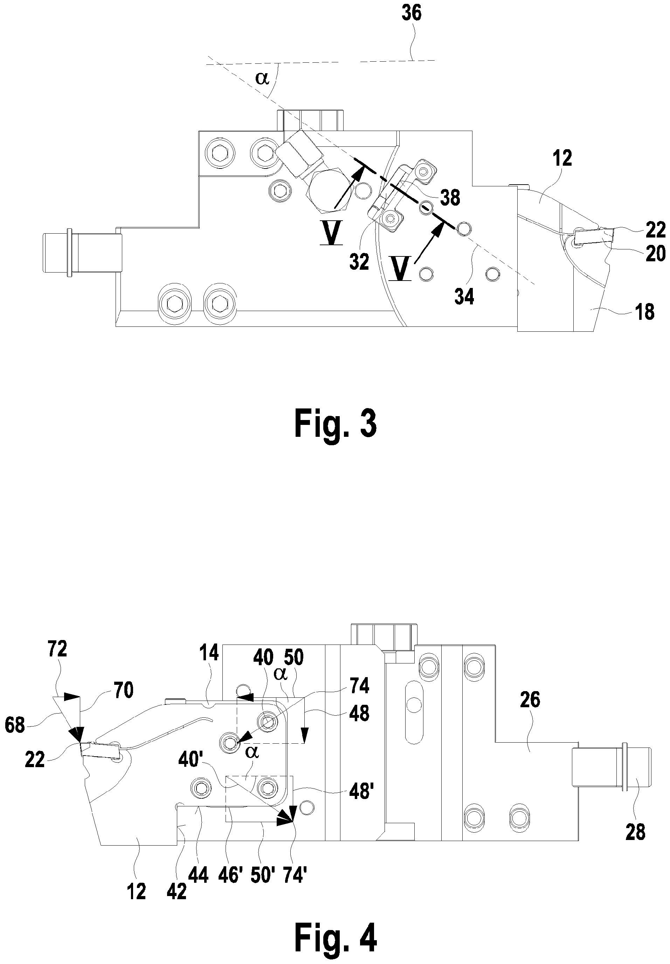

Der Sensor 32 ist in dem Werkzeughalter 10 geneigt angeordnet. Genauer gesagt, ist eine sensitive Achse des Sensors 32, die in Fig. 3 mit einer gestrichelten Linie dargestellt und der Bezugsziffer 34 versehen ist, gegenüber der Längsrichtung bzw. Längsachse 36 des Werkzeughalters 10 geneigt. Bei der sensitiven Achse 34 handelt es sich um eine Achse, entlang derer der Sensor 32 seine Hauptsensitivität hat. Diese Achse 34 ist vorzugsweise senkrecht zu einer Ober- bzw. Unterseite 38 des Sensors 32.

Der Winkel α, unter dem die sensitive Achse 34 des Sensors 32 relativ zu der Längsachse 36 des Werkzeughalters 10 geneigt ist, hat vorzugsweise eine Größe von 30° - 60°. Es handelt sich bei dem Winkel α also vorzugsweise um einen spitzen Winkel.

Der Winkel α ist besonders bevorzugt derart gewählt, dass die sensitive Achse 34 des Sensors 32 mit der Richtung einer resultierenden Kraft, die auf den Werkzeughalter 10 während des Zerspanungsvorgangs einwirkt, zusammenfällt oder unter einem Winkel von maximal 10° relativ zu dieser Richtung ausgerichtet ist. Und zwar handelt es sich hierbei um die Richtung der resultierenden Kraft an der Stelle des Sensors 32. Die Richtung dieser resultierenden Kraft ist in Fig. 4 anhand eines Pfeils mit der Bezugsziffer 40 bzw. 40' schematisch gekennzeichnet.

Während der Bearbeitung wirkt auf die Schneidplatte 20 bzw. die Schneide 22 eine Kraft ein, die in Fig. 4 schematisch mit dem Pfeil 68 gekennzeichnet ist. Diese Zerspankraft 68 lässt sich in einen Schnittkraft-Anteil 70 und einen Vorschubkraft-Anteil 72 aufteilen. Bei dreidimensionaler Betrachtung wäre zusätzlich noch der senkrecht dazu stehende Anteil der Passivkraft zu betrachten, was der Einfachheit halber hier jedoch weggelassen wird.

Aufgrund der Zerspankraft 68 werden in dem Werkzeughalter 10 entsprechende Kräfte und Momente induziert, deren Beträge und Richtung sich je nach Betrachtungsort im Werkzeughalter 10 voneinander unterscheiden. Fig. 4 zeigt für zwei mögliche Positionen 74, 74' schematisch die Kräfteparallelogramme, mit den an diesen Positionen 74, 74' jeweils wirkenden, resultierenden Kräften 40, 40'.

Die resultierenden Kräfte 40, 40' umfassen jeweils einen vertikalen Kraftanteil 48, 48' und einen horizontalen Kraftanteil 50, 50'. Die vertikalen Kraftanteile 48, 48' ergeben sich jeweils im Wesentlichen aus dem Schnittkraft-Anteil 70 der Zerspankraft 68. Die horizontalen Kraftanteil 50, 50' ergeben sich hingegen im Wesentlichen aus dem Vorschubkraft-Anteil 72 der Zerspankraft 68 sowie aus der momentinduzierten Hebelkraft an der jeweiligen Position 74, 74' des Sensors 32. Die zugehörigen Hebelarme sind die vertikalen und horizontalen Abstände der Positionen 74, 74' von der Schneide 22.

Für die Position 74 ergibt sich somit eine Zugbelastung, wohingegen sich für die Position 74' eine Druckbelastung ergibt. Wird der Sensor 32 also an der ersten Position 74 im Werkzeughalter 10 angeordnet, so wird er im Wesentlichen einer Zugbelastung ausgesetzt. Wird der Sensor 32 hingegen an der zweiten Position 74' im Werkzeughalter 10 angeordnet, so wird er im Wesentlichen einer Druckbelastung ausgesetzt. Je nach Ort erfolgt die Ausrichtung der sensitiven Achse 34 des Sensors 32 möglichst exakt entlang der Richtung der resultierenden Kraft 40 bzw. 40'.

Es versteht sich, dass es sich bei den gezeigten Positionen 74, 74' um mögliche Positionierungen des Sensors 32 im Kraftnebenschluss handelt. Bei einer Anordnung des Sensors 32 im Kraftnebenschluss fliesst nur ein Teil der Kräfte durch den Sensor 32. Daher stellen die in Fig. 4 schematisch gezeigten Parallelogramme auch nur einen Teil der Kräfte in der Schnittebene des Werkzeughalters 10 dar, und zwar den Anteil, der an der jeweiligen Position 74, 74' durch den Sensor 32 fliesst.

Wie aus Fig. 4 ferner ersichtlich ist, liegt das Werkzeug 12 an zwei Anlageflächen 42, 44 in der Werkzeugaufnahme 14 an, wenn das Werkzeug 12 am Werkzeughalter 10 montiert ist. Die erste Anlagefläche 42 verläuft in dem vorliegend gezeigten Ausführungsbeispiel in vertikaler Richtung, während die zweite Anlagefläche 44 horizontal verläuft. Die beiden Anlageflächen 42, 44 verlaufen demnach senkrecht zueinander. Die zweite Anlagefläche 44 ist, wie aus Fig. 4 ersichtlich ist, durch eine Aussparung 46 unterbrochen, um die Auflage des Werkzeugs 12 zu stabilisieren bzw. noch exakter gestalten zu können.

Je nachdem, ob mit dem Sensor 32 vorwiegend Zug- oder Druckbelastungen gemessen werden sollen, ergeben sich erfindungsgemäß somit zwei mögliche optimale Positionen (siehe Positionen 74, 74') bzw. Ausrichtungen des Sensors 32 innerhalb des Werkzeughalters 10. Eine der beiden optimalen Ausrichtungsmöglichkeiten ist in Fig. 3 gezeigt, in der die sensitive Achse 34 des Sensors 32 mit der Richtung 40 der resultierenden Kraft zusammenfällt. Die zweite optimale Ausrichtungsmöglichkeit, die vorliegend nicht explizit gezeigt ist, ist die Ausrichtung der sensitiven Achse 34 des Sensors 32 entlang der Richtung 40' (vgl. Fig. 4).

Je genauer die sensitive Achse 34 auf die Richtung 40 der resultierenden Kraft ausgerichtet ist, desto genauere und stabilere Messungen der auf die zumindest eine Schneide 22 einwirkenden Schnittkräfte sind möglich. Da die zweite Anlagefläche 44 in dem vorliegenden Ausführungsbeispiel parallel zu der Längsachse 36 des Werkzeughalters 10 ausgerichtet ist, ergibt sich selbiger Winkel α somit nicht nur zwischen der sensitiven Achse 34 und der Längsachse 36, sondern auch zwischen der sensitiven Achse 34 und der zweiten Anlagefläche. Ein entsprechender Gegenwinkel ergibt sich zwischen der sensitiven Achse 34 und der ersten Anlagefläche 42.

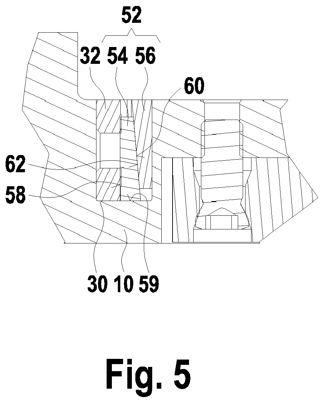

Der Sensor 32 ist mit Hilfe einer Einspanneinrichtung 52, die in Fig. 5 im Detail gezeigt ist, in dem Werkzeughalter 10 eingespannt. Genauer gesagt, ist der Sensor 32 mit Hilfe dieser Einspanneinrichtung 52 festgeklemmt. Die Einspanneinrichtung 52 weist zwei Keilelemente 54, 56 auf. Diese zwei Keilelemente 54, 56 sind gegenläufig zueinander in die Sensoraufnahme 30 eingesetzt. Das erste Keilelement 54 liegt mit seiner ersten Seitenfläche 58 an dem Sensor 32 an und mit seiner gegenüberliegenden zweiten Seitenfläche 60 an einer Keilfläche 62 des zweiten Keilelements 56 an. Die erste Seitenfläche 58 ist vorzugsweise parallel zu der Oberseite des Sensors 32 ausgerichtet, an der sie anliegt. Die zweite Seitenfläche 60 und die Keilfläche 62 liegen vorzugsweise bündig aneinander an und sind unter einem spitzen Winkel relativ zu der ersten Seitenfläche 58, die an dem Sensor 32 anliegt, ausgerichtet. Das zweite Keilelement 56 ist vorzugsweise mit Hilfe von zwei Schrauben (nicht dargestellt) verschiebbar (vgl. Fig. 1 und 2). Auf diese Weise lässt sich die Vorspannkraft, mit der der Sensor 32 in der Sensoraufnahme 30 vorgespannt ist, exakt einstellen.

Das erste Keilelement 54 liegt stirnseitig an einer im Inneren der Sensoraufnahme 30 vorgesehenen Anlagefläche 59 an. Diese Anlagefläche 59 dient als Abstützung für das erste Keilelement 54. Sie stützt das erste Keilelement 54 insbesondere während des Einschiebens des zweiten Keilelements 56 in die Sensoraufnahme 30 ab und verhindert dadurch eine Übertragung unerwünschter Scherkräfte von dem ersten Keilelement 54 auf den Sensor 32. Die vorgesehene Einspanneinrichtung 52 ermöglicht also ein Verspannen des Sensors 32 innerhalb der Sensoraufnahme 30, ohne dass der Sensor 32 hierdurch unerwünschte Scherkräfte erfährt.

Es versteht sich, dass diese Art der Abstützung des ersten Keilelements 54 auch auf eine andere Art erfolgen kann, ohne den Rahmen der vorliegenden Erfindung zu verlassen.

Eine Vorspannung des Sensors 32 entlang seiner sensitiven Achse 34 ist hingegen bevorzugt. Eine derartige Vorspannung ist insbesondere dann vonnöten, wenn mit Hilfe des Sensors 32 nicht nur Druck-, sondern auch Zugbelastungen gemessen werden sollen. Im Fall einer Zugbelastung muss die Vorspannung des Sensors 32 nämlich größer sein als die durch den Zerspanungsprozess auf den Sensor 32 wirkende Zugkraft, damit der Sensor 32 stets in einem vorgespannten Zustand verbleibt.

Der Sensor 32 ist über ein Kabel 64 angeschlossen, das durch einen im Inneren des Werkzeughalters 10 verlaufenden Kabelkanal 66 aus der Sensoraufnahme 30 nach außen geführt ist (vgl. Fig. 2). Das Kabel 64 ist somit sicher vor Beschädigungen geschützt und der Anschluss des Sensors 32 kann problemlos erfolgen.

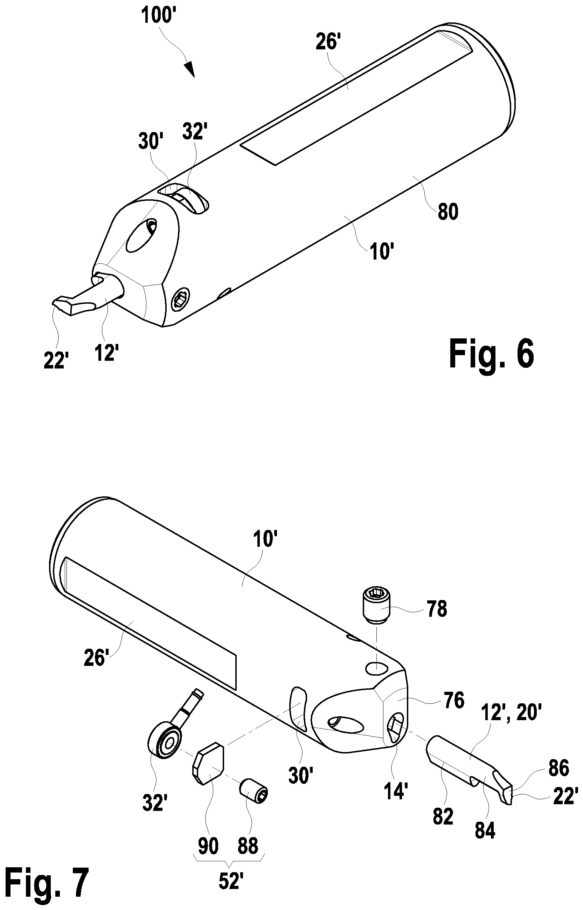

Fig. 6-8 zeigen ein zweites Ausführungsbeispiel des erfindungsgemäßen Werkzeugsystems 100'. Gleiche oder äquivalente Bauteile sind darin mit den zuvor genannten Bezugszeichen inklusive eines zusätzlichen Hochstrichs versehen.

Bei dem in Fig. 6-8 gezeigten Werkzeugsystem 100' handelt es sich um ein Zerspanwerkzeug mit einem länglichen Werkzeughalter 10', an dessen stirnseitigen Ende 76 eine topfförmige Werkzeugaufnahme 14' angeordnet ist. Bei dem Werkzeug 12' handelt es sich in diesem Fall um einen Schneideinsatz 20', der mit Hilfe eines Befestigungsmittels 78 lösbar in der Werkzeugaufnahme 14' befestigt ist. Das Befestigungsmittel 78 ist in diesem Fall als Klemmschraube ausgestaltet. Es versteht sich jedoch, dass auch andere Möglichkeiten zur Befestigung des Werkzeugs 12' in der Werkzeugaufnahme 14' in Frage kommen, ohne den Rahmen der vorliegenden Erfindung zu verlassen.

Als Maschinenschnittstelle 26' dient hier der hintere Teil eines Werkzeughalterschafts 80. Dieser Werkzeughalterschaft 80 kann an einer oder mehreren Stellen teilweise abgeflacht sein, um die Befestigung des Werkzeughalters 10' an einer Werkzeugmaschine zu erleichtern.

Der Schneideinsatz 20' weist einen Einspannabschnitt 82, einem Auslegerarm 84 und einen Schneidkopf 86, an dem die mindestens eine Schneide 22' angeordnet ist, auf. Der Schneidkopf 86 ist an dem ersten Ende des Auslegerarms 84 angeordnet. Der Einspannabschnitt 82 ist an dem gegenüberliegenden zweiten Ende des Auslegerarms 84 angeordnet. Der Auslegerarm 84 hat einen kleineren Querschnitt als der Einspannabschnitt 82.

In montiertem Zustand ist der Einspannabschnitt 82 des Werkzeugs 12' in die Werkzeugaufnahme 14' eingeführt. Der Einspannabschnitt 82 und die Werkzeugaufnahme 14' haben in diesem Ausführungsbeispiel einen im Wesentlichen tropfenförmigen Querschnitt.

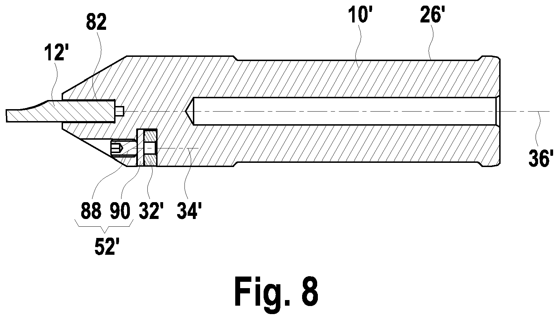

Der Sensor 32' ist auch in diesem Ausführungsbeispiel in eine Sensoraufnahme 30' lösbar eingesetzt, die sowohl von der Werkzeugaufnahme 14' als auch von der Maschinenschnittstelle 26' beabstandet ist. Ebenso ist auch hier die Position und Ausrichtung des Sensors 32' so gewählt, dass der Sensor 32' möglichst geringen Scherkräften ausgesetzt und möglichst parallel zu dem Kraftfluss innerhalb des Werkzeughalters 10' positioniert ist. Aufgrund des etwas anderen Kraftflusses innerhalb des Werkzeughalters 10', ist die sensitive Achse 34' in diesem Fall jedoch parallel oder zumindest im Wesentlichen parallel zu der Längsachse 36' des Werkzeughalters 10' ausgerichtet (vgl. Fig. 8).

Die Einspanneinrichtung 52' weist in diesem Fall eine Befestigungsschraube 88 auf, mithilfe derer der Sensor 32' axial vorspannbar ist. Zudem dient ein plattenförmiges Druckstück 90 dazu, die Kraft möglichst gleichmäßig und vollflächig auf den Sensor 32' zu verteilen und unerwünschte Scherkräfte zu vermeiden. Das plattenförmige Druckstück 90 ist zwischen dem Sensor 32' und der Befestigungsschraube 88 angeordnet und liegt vorzugsweise flächig an dem Sensor 32' an. Die Funktionsweise des Sensors 32' entspricht ansonsten im Wesentlichen der Funktionsweise, wie sie bezüglich des ersten Ausführungsbeispiels erläutert wurde.

## Patentansprüche

1. Werkzeughalter (10, 10') mit einer Werkzeugaufnahme (14, 14'), die dazu eingerichtet ist, ein Werkzeug (12, 12') mit zumindest einer Schneide (22, 22') zur spanenden Bearbeitung eines Werkstücks darin lösbar aufzunehmen, mit einer Maschinenschnittstelle (26, 26'), die dazu eingerichtet ist, eine Befestigung des Werkzeughalters (10, 10') an einer Werkzeugmaschine zu ermöglichen, und mit einer Sensoraufnahme (30, 30'), in der ein Sensor (32, 32') aufgenommen ist, der dazu eingerichtet ist, ein Messsignal zu erzeugen, das abhängig von einer auf den Werkzeughalter (10, 10') einwirkenden Kraft ist,
**dadurch gekennzeichnet, dass** die Sensoraufnahme (30, 30') sowohl von der Werkzeugaufnahme (14, 14') als auch von der Maschinenschnittstelle (26, 26') beabstandet angeordnet ist, so dass der Sensor (32, 32') weder mit dem Werkzeug (12, 12') noch mit der Werkzeugmaschine in direktem Kontakt steht, wenn das Werkzeug (12, 12') in der Werkzeugaufnahme (14, 14') aufgenommen ist und der Werkzeughalter (10, 10') an der Werkzeugmaschine befestigt ist.

2. Werkzeughalter gemäß Anspruch 1, **dadurch gekennzeichnet, dass** eine sensitive Achse (34) des Sensors (32), entlang derer der Sensor (32) seine Hauptsensitivität hat, unter einem spitzen Winkel (α) relativ zu einer Längsachse (36) des Werkzeughalters (10) ausgerichtet ist.

3. Werkzeughalter gemäß Anspruch 2, **dadurch gekennzeichnet, dass** die sensitive Achse (34) mit einer Richtung (40) einer resultierenden Kraft, die aus der auf den Werkzeughalter (10) einwirkenden Kraft resultiert, zusammenfällt oder unter einem Winkel von maximal 10° zu dieser Richtung (40) ausgerichtet ist.

4. Werkzeughalter gemäß Anspruch 2 oder 3, **dadurch gekennzeichnet, dass** die Werkzeugaufnahme (14) eine erste Anlagefläche (42) und eine quer dazu verlaufende zweite Anlagefläche (44) zur Anlage an dem Werkzeug (12) aufweist, und dass die sensitive Achse (34) des Sensors (32) unter einem ersten spitzen Winkel relativ zu der ersten Anlagefläche (42) und unter einem zweiten spitzen Winkel relativ zu der zweiten Anlagefläche (44) ausgerichtet ist.

5. Werkzeughalter gemäß Anspruch 4, **dadurch gekennzeichnet, dass** die zweite Anlagefläche (44) parallel zu der Längsachse (36) des Werkzeughalters (10) ausgerichtet ist.

6. Werkzeughalter gemäß einem der vorstehenden Ansprüche, **dadurch gekennzeichnet, dass** der in der Sensoraufnahme (30, 30') montierte Sensor (32, 32') im Kraftnebenschluss des Werkzeughalters (10, 10') angeordnet ist.

7. Werkzeughalter gemäß einem der vorstehenden Ansprüche, **dadurch gekennzeichnet, dass** die Sensoraufnahme (30, 30') als Aufnahmetasche ausgebildet ist, die den Sensor (32, 32') von zumindest vier Seiten umschließt.

8. Werkzeughalter gemäß einem der vorstehenden Ansprüche, **dadurch gekennzeichnet, dass** der Sensor (32, 32') in der Sensoraufnahme (30, 30') mit Hilfe einer Einspanneinrichtung (52) eingespannt ist.

9. Werkzeughalter gemäß einem der vorstehenden Ansprüche, **dadurch gekennzeichnet, dass** die Einspanneinrichtung (52) zumindest teilweise von dem Werkzeughalter (10, 10') lösbar ausgestaltet ist.

10. Werkzeughalter gemäß Anspruch 9, **dadurch gekennzeichnet, dass** die Einspanneinrichtung (52) ein erstes Keilelement (54) und ein zweites Keilelement (56) aufweist.

11. Werkzeughalter gemäß Anspruch 10, **dadurch gekennzeichnet, dass** das erste Keilelement (54) mit einer ersten Seitenfläche (58) an dem Sensor (32) anliegt und mit einer gegenüberliegenden zweiten Seitenfläche (60) an einer Keilfläche (62) des zweiten Keilelements (56) anliegt, und dass die zweite Seitenfläche (60) und die Keilfläche (62) unter einem spitzen Winkel relativ zu der ersten Seitenfläche (58) ausgerichtet sind.

12. Werkzeughalter gemäß Anspruch 11, **dadurch gekennzeichnet, dass** in der Sensoraufnahme (30) eine Abstützung (59) angeordnet ist, die dazu eingerichtet ist, das erste Keilelement (54) bei einem Einschieben des zweiten Keilelements (56) in die Sensoraufnahme (30) abzustützen.

13. Werkzeughalter gemäß einem der Ansprüche 1 oder 6-9, **dadurch gekennzeichnet, dass** eine sensitive Achse (34') des Sensors (32'), entlang derer der Sensor (32') seine Hauptsensitivität hat, parallel zu einer Längsachse (36') des Werkzeughalters (10') ausgerichtet ist.

14. Werkzeughalter gemäß einem der Ansprüche 1, 6-9 oder 14, **dadurch gekennzeichnet, dass** die Werkzeugaufnahme (14') an einem stirnseitigen Ende des Werkzeughalters (10') angeordnet ist und als topfförmige Ausnehmung im Werkzeughalter (10') ausgestaltet ist.

15. Werkzeughalter gemäß einem der vorstehenden Ansprüche, **dadurch gekennzeichnet, dass** der Sensor (32, 32') einen Kraftaufnehmer aufweist.

16. Werkzeughalter gemäß einem der vorstehenden Ansprüche, **dadurch gekennzeichnet, dass** der Sensor (32) ein Kabel (64) aufweist, das durch einen im Inneren des Werkzeughalters (10) verlaufenden Kabelkanal (66) aus der Sensoraufnahme (30) nach außen geführt ist.

17. Werkzeugsystem (100), aufweisend:
- den Werkzeughalter (10, 10') gemäß einem der Ansprüche 1-16; und
- das Werkzeug (12, 12') mit der zumindest einen Schneide (22, 22') zur spanenden Bearbeitung des Werkstücks.

18. Werkzeugsystem nach Anspruch 17, **dadurch gekennzeichnet, dass** das Werkzeug (12) eine Werkzeugkassette mit einer Schneidplattenaufnahme aufweist, in der eine Schneidplatte (20) angeordnet ist, an der die zumindest eine Schneide (22) ausgebildet ist, und dass die Werkzeugkassette mit Hilfe zumindest eines Befestigungselements (16) in der Werkzeugaufnahme (14) an dem Werkzeughalter (10) lösbar befestigt ist.

19. Werkzeugsystem nach Anspruch 17, **dadurch gekennzeichnet, dass** das Werkzeug (12') eine Schneidplatte (20') aufweist, an der die zumindest eine Schneide (22') ausgebildet ist, wobei die Schneidplatte (20') einen Einspannabschnitt aufweist, der in die Werkzeugaufnahme (14') des Werkzeughalters (10') eingeführt und darin lösbar befestigt ist.
